# EUROPEAN PATENT SPECIFICATION

(11) **EP 3 235 150 B1**
(45) Date of publication and mention of the grant of the patent: **14.08.2019**
(21) Application number: 15870571.5
(22) Date of filing: 17.11.2015
(51) Int. Cl.: H04L 29/06, H04W 12/06, H04W 12/04, H04W 4/80, H04B 13/00

(54) **EXTENSION OF TRUST IN A BODY AREA NETWORK**
ERWEITERUNG DES VERTRAUENS IN EINEM KÖRPERNAHEN NETZWERK
EXTENSION DE CONFIANCE DANS UN RÉSEAU LOCAL CORPOREL

(30) Priority: 17.12.2014 US 201414573992
(43) Date of publication of application: 25.10.2017
(73) Proprietor: Intel Corporation, Santa Clara, CA 95054 (US)
(72) Inventor: WEAST, John C., Portland, Oregon 97201 (US); BOOTH, Cory J., Beaverton, Oregon 97007 (US); VEMBAR, Deepak, Portland, Oregon 97211 (US); DURHAM, Lenitra M., Beaverton, Oregon 97007 (US)
(74) Representative: HGF Limited
(86) International application number: PCT/US2015/061070
(87) International publication number: WO 2016/099749

(56) References cited:
- US-A1- 2009 094 681
- US-A1- 2011 221 590
- US-A1- 2011 227 856
- US-A1- 2013 019 292
- US-A1- 2013 142 363
- CORNELIUS CORY ET AL: "Recognizing Whether Sensors Are on the Same Body", 12 June 2011 (2011-06-12), MEDICAL IMAGE COMPUTING AND COMPUTER-ASSISTED INTERVENTION - MICCAI 2015 : 18TH INTERNATIONAL CONFERENCE, MUNICH, GERMANY, OCTOBER 5-9, 2015; PROCEEDINGS; [LECTURE NOTES IN COMPUTER SCIENCE; LECT.NOTES COMPUTER], SPRINGER INTERNATIONAL PUBLISHING, CH, XP047433357, ISSN: 0302-9743 ISBN: 978-3-642-38287-1 * page 332 - page 338 *
- CORY CORNELIUS ET AL.: 'A Wearable System That Knows Who Wears It' MOBISYS 14 PROCEEDINGS OF THE 12TH ANNUAL INTERNATIONAL CONFERENCE ON MOBILE SYSTEMS, APPLICATIONS, AND SERVICES 02 June 2014, pages 55 - 67, XP058049606 ISBN: 978-1-4503-2793-0 Retrieved from the Internet: <URL:http://dl.acm.org/citation.cfm?id=2594 369>

## Description

### CLAIM OF PRIORITY

This patent application claims the benefit of priority to U.S. Application No. 14/573,992, filed December 17, 2014.

### TECHNICAL FIELD

Embodiments described herein generally relate to network management and more specifically to extension of trust in a body area network.

### BACKGROUND

Wearable devices are devices designed to be worn on a body. Wearable devices may include sensors or processing capabilities to observe the body, or other information, and provide those observations or calculations made from those observations to people. Some modern wearable devices may communicate with each other to share information. A collection of these wearable devices on a body may be known as a Body Area Network (BAN). One communications mechanism for BAN devices is Body Coupled Communication (BCC), in which the body itself serves as a communications medium.

US 2011/0221590 A1 describes a method for automatically adding a first sensor to a first personal area network in a healthcare application which includes receiving a signal with out-of-band pairing data at the first sensor device. The first sensor device is disposed on a patient's body. The out-of-band pairing data is injected into the patient's body by a second sensor device disposed on the patient's body. Pairing data is extracted from the received signal at the first sensor device. Using the pairing data, the first sensor device is added to the first personal area network.

"Recognizing Whether Sensors Are On The Same Body", C. Cornelius and D. Kotz, Medical Image Computing and Computer-assisted intervention, 12 June 2011, describes a method to probabilistically detect a situation in which to wearer's of personal health sensors accidentally swap sensors.

### BRIEF DESCRIPTION OF THE DRAWINGS

In the drawings, which are not necessarily drawn to scale, like numerals may describe similar components in different views. Like numerals having different letter suffixes may represent different instances of similar components. The drawings illustrate generally, by way of example, but not by way of limitation, various embodiments discussed in the present document.
FIG. 1 is a block diagram of an example of a system for extension of trust in a BAN, according to an embodiment.
FIG. 2 illustrates an example of a technique for determining that wearable devices are on the same body, according to an embodiment.
FIG. 3 illustrates an example of a technique for determining that wearable devices are on the same body, according to an embodiment.
FIG. 4 illustrates an example of a technique for determining that wearable devices are on the same body, according to an embodiment.
FIG. 5 illustrates a flow diagram of an example of a method for extension of trust in a BAN, according to an embodiment.
FIG. 6 illustrates a flow diagram of an example of a method for extension of trust in a BAN, according to an embodiment.
FIG. 7 is a block diagram illustrating an example of a machine upon which one or more embodiments may be implemented.

### DETAILED DESCRIPTION

It may be anticipated that as wearable devices (e.g., wearables) become more available and provide greater functionality people will use multiple wearables more frequently. Some current wearables are built as single devices, each with its own methods for authenticating to the user (or to their smartphone or other mobile device). This model works when there are just a few wearables on the body but may become overly burdensome to a user, or practically unworkable, when many worn objects (shirts, shoes, socks, rings, watches, phones, etc.) are present, some of which may have limited input mechanisms to actually perform the authentication. For example, a shirt with embedded sensors may not have an ability to input, or even display, a personal identification number (PIN). Further, users may not adopt a model where they have to manually authenticate multiple worn objects, for example, during their busy morning routine.

One may think of these multiple wearables as a wearable ensemble. When the ensemble authenticates to each other, they form a BAN. Thus, for the purposes of this description, the term BAN refers to the particular body area network composed of a wearable ensemble (although possibly other BANs may be present with different devices). The BAN network may use different physical media to communicate with each other, such as wired, wireless (e.g., personal area network (PAN) or wireless local area network (WLAN) protocols), or other media (e.g., the body in the case of BCC). In order to address the authentication issues identified above, the body to which the devices are attached and upon which they form the BAN may be used to establish the relationship between these devices. That is, the authentication mechanisms in use seek to establish whether the user intends for any given device to be trusted in communications. This user intention is inferred by the placement of a wearable on the user's body. Thus, establishing that a new wearable (e.g., potential BAN participant) should be trusted (e.g., promoted to a trusted participant) may include establishing that the new device has been placed on the same body as other trusted BAN participants. Each participant may maintain their trusted status as long as they remain affixed to the body. This mechanism permits an intuitive authentication mechanism whose security reflects a user's own effort to maintain the physical security of their body. An example of the described devices and techniques proceeds below.

Consider a future 'day in the life' of a person who has eight wearables that are used on a daily basis (e.g., watch, glasses, ring, phone, shoes, shirt, gloves, etc.). Typically, to get dressed in the morning that person would have to pair each device with the phone, requiring a separate setup and authentication process for each device. Even worse, if the devices need to communicate with each other (e.g., in a mesh network topology), the person would typically setup a pairing between each and every combination of worn devices. The complexity and amount of time consumed may be fairly called a horrible user experience. At best, this procedure would add precious minutes to the daily routine for the person to get out of the door in the morning. At worst, users may reject such a cumbersome process and thus fail to benefit from the capabilities of the wearable marketplace. Adding to the complexity, some devices (e.g., such as the shirt) may not have any input mechanism with which to perform the authentication. Such input mechanisms may be omitted because they increase the expense of producing the wearable, or may simply be impractical.

Using the techniques and mechanisms described herein, in an example, the person puts on a strictly authenticated wearable device. This first device is authenticated as discussed above. For example, a smart watch with a biometric scanner may be this first wearable into which a pairing PIN (e.g., from the person's mobile) fingerprint scan, etc., is entered to authenticate the watch. Once this first wearable is authenticated, however, from that moment forward, every other 'worn' device may receive that same level of trust as the first wearable by virtue of being on the same body-e.g., through the use of BANs and BCC to determine if the added ring, shirt, shoes, etc., are physically on the same body. If the new wearable is on the same body, the new wearable may be extended the same level of trust as on the fingerprint scanned wrist worn device. In this way users simply get ready just as they do today and avoid suffering the inconvenience of separately authenticating the individual wearables.

BCC was mentioned above as a way in which a new wearable is determined to be on the person's body. Other such mechanisms may be used instead of, or in addition to, BCC to make this determination. These mechanisms, however, share the trait that the user does not provide authentication input to the new wearables. For example, asking the user to "take a few steps" and then having each device present its measured gait detection to the strictly authenticated wearable to prove they are on the same physical body provides extra confidence (especially in public areas where there may be many other worn devices). These usages are made possible through the novel synthesis of biometric authentications and use of BCC not for communications purposes, but as a proxy for physically being on the same body and so thus eligible to be part of that individual's wearable ensemble. In an example, once reasonable assurances have been made on whether the wearable is actually on the same body, the same BAN/BCC mechanisms used to identify that the device is on the same body may also be used to communicate keys or other information needed to join the BAN made up of the ensemble. In an example, a variety of near-field wireless technologies may be used (e.g., in advertising mode) to broadcast keys. For example, a UUID may be assigned for each BAN instance that is created, either locally or globally, through a unique key generator. This key may be sent out in the advertising packets in Bluetooth® Low Energy (BLE) protocols, either unencrypted or encrypted, to avoid some of the security implications of broadcasting keys. The advertisement packets payload could change as the ensemble keys change, due to events such as a wearable being added or removed from the whole ensemble of wearable devices. All the on-body wearables may use this key to join and logically group themselves as being a part of the same body.

Trust level transmission to wearables as they join the ensemble allows the BAN to continuing to function even in absence of the strictly authenticated wearable. Consider the case of using an ID badge to get access to an office lab. In the morning, the wearables the person has on his body may be authenticated as a) being on him; and b) grant him level of access provided by the ID badge. When the person goes into the office, the shirt being still worn may grant access to the lab even in absence of the ID card. Thus, the trust embodied in the ID badge maybe propagated to another wearable (e.g., the shirt) that the user puts on. This trusted mode may persist while the wearables are on the same body and lost when the last wearable is taken off the body (e.g., ending the BAN).

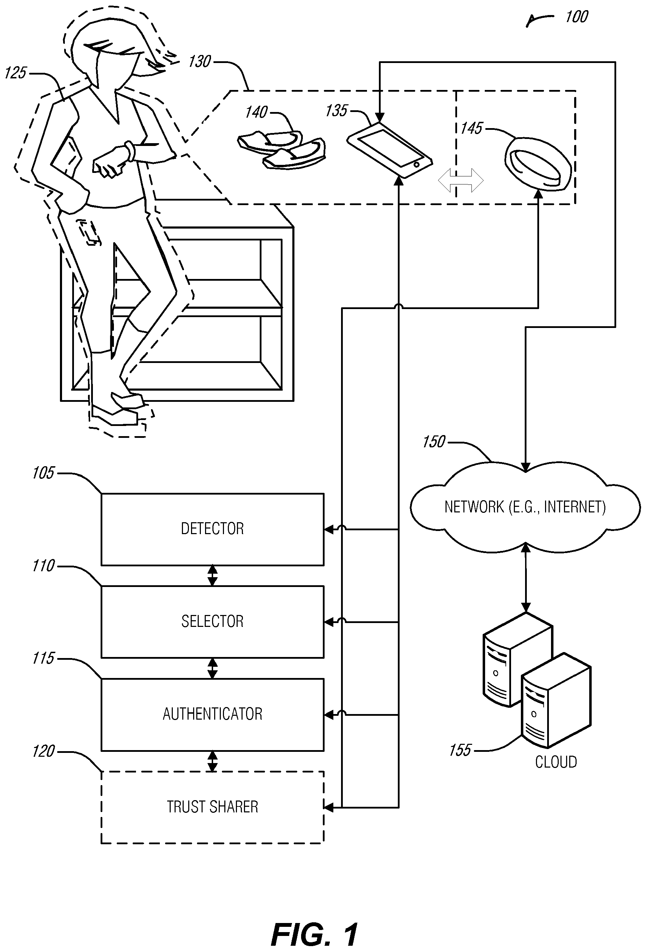

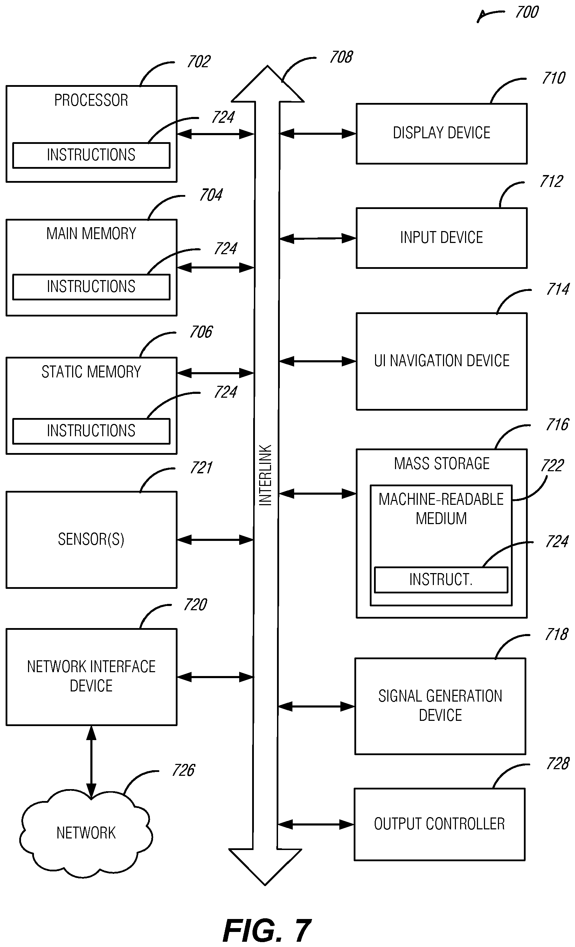

FIG. 1 is a block diagram of an example of a system 100 for extension of trust in a BAN, according to an embodiment. The system 100 may include a detector 105, a selector 110, and an authenticator 115. In an example, the system 100 may also include a trust sharer 120. Instances of any of these components may reside in a mobile device 135, a wearable (e.g., shoes 140 or bracelet 145, or in a cloud 155 communicatively coupled to any of the mobile device 135 or wearables 140 or 145 via a network 150. Individual components may be implements as groups of circuits (e.g., as described below with respect to FIG. 7) or other computer hardware.

As illustrated, the user's body 125 has a BAN 130 corresponding to it. Examples below generally describe the shoes 140 (e.g., a trusted participant of the BAN 130) and the mobile device 135 as part of the BAN 130 while the bracelet 145 is the wearable that is joining and leaving the BAN 130 (e.g., a potential participant that may be promoted to a trusted participant of the BAN 130). However, it is understood that the specific implementations of various embodiments may vary the specific entities that are joining and leaving the BAN 130 for trust extension in the BAN 130.

The detector 105 may be arranged (e.g., configured or otherwise designed) to identify a device (e.g., bracelet 145) that is a potential participant of the BAN 130. In an example, the detector 105 may include a transceiver to receive a signal from the device 145. For example, the device 145 may include an activation button, or other switch (e.g., activated when the device 145 is put on) to transmit a discovery signal that may be used by the detector 105. In an example, the detector 105 may transmit broadcast (e.g., upon user input, periodically, or continuously) to which the device 145 responds, providing the signal. In an example, the detector 105 may receive user direction about the device 145, indicating that it is being added to the BAN 130.

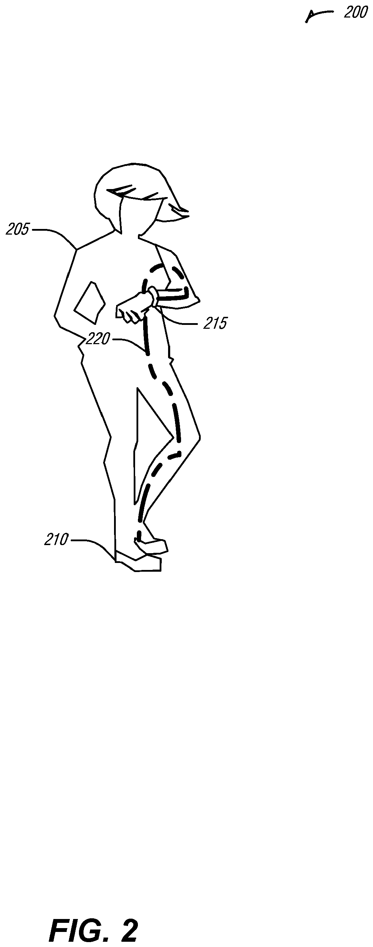

The selector 110 may be arranged to determine that the device 145 is worn on the body 125 associated with the BAN 130 based on a set of models of the body 125. In an example, the set of models of the body include a BCC model. In this example, determining that the device 145 is worn on the body 125 includes the selector 110 arranged to communicate with the device 145 from a member BAN 130 using BCC. In the BCC model, the communications capabilities of the body 125 sufficiently represent whether the device 145 is worn upon the body 125 or not. That is, if the trusted participant 140 establishes contact with the potential participant 145 via BCC, then both devices 140 and 145 are attached to the body 125. In the BCC model, the communication may be limited to simple identification because the BCC channels may not be used for general communication between the trusted participant 140 and the potential participant 145, but rather may be limited to simply ascertaining whether the potential participant 145 is on the body 125. FIG. 2 illustrates an example of BCC modeling.

In an example, the set of models of the body 125 may include a motion model. In this example, determining that the device 145 is worn by the body 125 may include the selector 110 to obtain motion data from both the trusted participant 140 and the potential participant 145, apply a function to each of the obtained motion data sets, and determine whether the results of the functions match to within a threshold. For example, if the trusted participant 140 and the potential participant 145 move together (e.g., vertically oscillate synchronously) then it is evident that they are affixed to the some moving form.

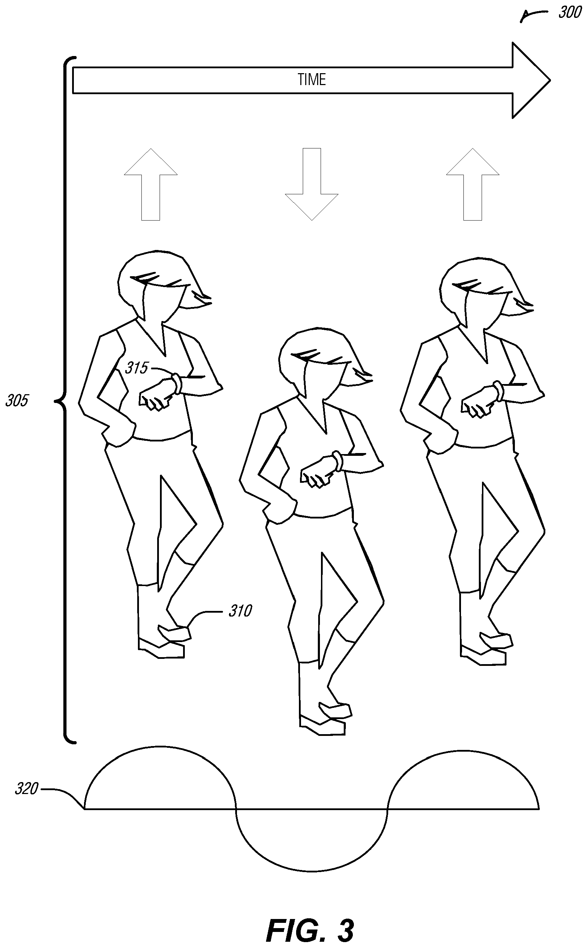

In an example, the functions may be the same, such as a filter or even a pass-through function in which the raw motion data is compared. In an example, the functions may be selected based a device type of the particular device to which it is being applied. Example device types may be differentiated by common names for device (e.g., watches, necklaces, glasses, headphones, jackets, shirts, pants, skirts, etc.), on body positions (e.g., wrist-worn, foot-worn, torso-worn, etc.), or other common traits to which a single motion function may be applied. Function differentiation based on device type may provide filtering or other processing that recognizes general movement characteristics of parts of the body to a norm in order to facilitate motion data set comparison. For example, devices that, by their type, are likely to be worn on an arm may more aggressively filter non-periodic motion than a device worn near the waist (e.g., a belt) thus allowing for greater uniformity in the results used to compare synchronous movement between the trusted participant 140 and the potential participant 145. Some additional detail of the motion model is described below with respect to FIG. 3.

In an example, set of models of the body 125 may include a shape model. In this example, determining that the device 145 is worn by the body 125 may include the selector 110 to obtain a physical relationship between the trusted participant 140 and the device 145 and then determine that the physical relationship satisfies a shape of a body 125. For example, if the trusted participant measures its position, and the potential participant measures its position, and both positions are on a modeled form of the body 125 in three-dimensional space then it is evident that both devices are on the body 125. In an example, the selector 110 may determine at least one of a direction or a distance between the trusted participant 140 and the potential participant 145. For example, the trusted participant 140 may include a directionally constrained wireless transceiver (e.g., light emitter, directionally radio, sound emitter, etc.) that is used to scan the surrounding area. The potential participant 145 may respond when the scan passes over the potential participant 145. The trusted participant 140 may then register the relative direction to the potential participant 145 when the response is received. Further, by noting channel conditions a distance between the two devices may be ascertained. Further mechanisms, such as a camera on the trusted participant 140 may be used to determine either or both of the direction or distance.

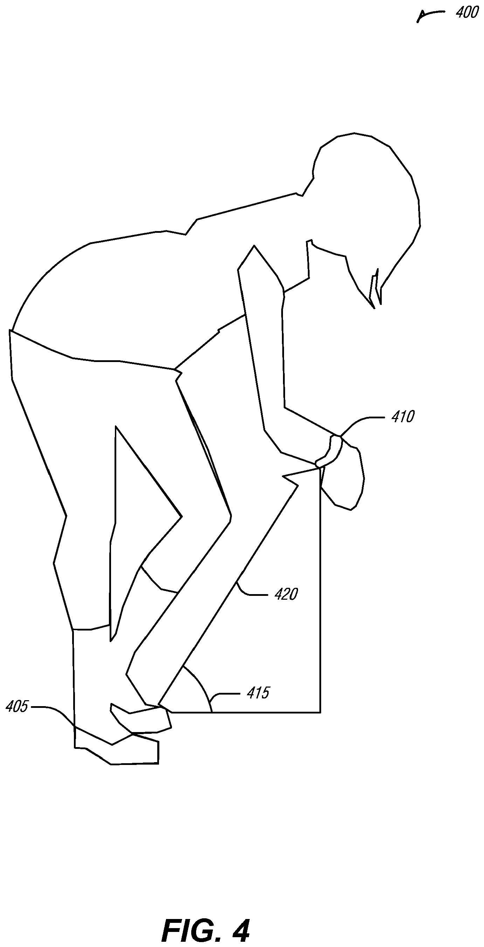

In an example, determining that the physical relationship satisfies a shape of the body 125 may include the selector 110 to identify a first set of body positions of the trusted participant 140 based on a first device type of the trusted participant 140, identify a second set of body positions of the potential participant 145 based on a second device type of the potential participant, and
determine that a member of the first set of body positions offset by at least one of the direction or the distance is within a threshold of a member of the second set of body positions. This technique uses the body's morphology to determine possible positions that a particular wearable may occupy. These positions may be constrained by the device type. For example, a watch may be assumed to be on a wrist and a belt on a waist. Thus, these device types reduce the possible positions that are searched. Direction and distance between the calculated positions may then be compared with the measured direction and distance between the trusted participant 140 and the potential participant 145. If there is a match, it is evident that the devices are worn on the body 125. In an example, the body shape is modified by sensed posture changes in the body 125. Thus, the potential sets of body positions may be different, for example, between a standing posture and a kneeling posture. Thus, in this example, the offset may be modified by the position of the body 125. Some additional details are described below with respect to FIG. 4.

In an example, the selector 110 may use a plurality of models to determine whether the device 145 is worn on the body 125. Thus, the results of one model are checked against those of another model to address possible shortcomings of any given model in a variety of physical or data situations. In an example, the plurality of models may be applied serially. Thus, a second model is assessed only after the first model passes. Thus, computational resources may be spared if it is evident that the potential participant 145 is not worn on the body 125 according to the first model. In an example, the models are applied, weighted, and then compared to a pass threshold. Thus, individual model false negatives may be overridden by the application of the additional models.

In an example, the selector 110 may be arranged to monitor that the device 145 continues to be worn on the body 125 after it has been added to the BAN 130 (see below referring to the promotion of the device 145 from potential participant to trusted participant). The monitoring may use the same models described herein to determine whether the device 145 is worn on the body 125. If it is determined that the device 145 is removed from the body 125, the device 145 may be demoted from trusted participant to potential participant, or simply removed from the BAN 130.

The authenticator 115 may be arranged to promote the device 145 from potential participant to trusted participant of the BAN 130 in response to the determination that the device 145 is on the body 125. In an example, the promotion may include the authenticator 115 sharing a current BAN key with the device 145. This sharing may include any communications mechanism. In an example, the communication mechanism is BCC. In an example, the promotion may include the authenticator 115 assigning a unique identifier (UID) to the device 145. In an example, the promotion may include the authenticator 115 disseminating the UID to another member of the BAN 130. Thus, the device 145 may be individually referred to and accessed within the BAN 130.

In an example, the BAN 130 may include an external interface member (e.g., mobile device 135 although it could be any trusted BAN 130 member) that is a trusted participant of the BAN 130 and also an external trusted member. In this example, an external trusted member includes a trust component for an entity that is not part of the BAN 130, such as the network 150 or the cloud 155. Thus, the external interface member 135 may bridge the BAN 130 to external resources (e.g., information, processing capabilities, storage, etc.). In an example, the external interface member 135 may include a user interface to receive physical interactions (e.g., button pushing, touches, etc.) between the person and itself to authenticate the external interface member 135. The external interface member 135 may also include a verifier to join the external interface member to the entity 155 use the physical interactions. Thus, the external interface member 135 may include user inputs sufficient to allow the user to authenticate to the external resource. Also, the user interface may be used to strictly authenticate the external interface member 135 to the BAN 130. In an example, the entity is a network (e.g., corporate network 150 or cloud 155) that is not part of the BAN 130.

The trust sharer 120 may be arranged to share the trust component of the external interface member 135 with the device 145 in response to the promotion of the device 145 from potential participant to trusted participant. In an example, the device 145 is arranged to join to the network (e.g., cloud 155) using the trust component in response to a signal. For example, the user may have an electronic wallet mediated by the mobile device 135 governed by the trust component. After receiving the trust component, the device 145 may also respond to, for example, a point of sale near field wireless signal to authenticate the wallet to the cloud 155. In response to receiving this signal, the device 145 may provide the trust component to the point of sale terminal in order to allow the user to access the electronic wallet even if the mobile device 135 has run out of power or is otherwise unable to complete the task. Other trust component uses may include user access to a building, or providing a portion of a complete authentication mechanism. For example, the trust component may be one part of three that are used to access a safe. In this example, other trust components may be intrinsic to other wearables (e.g., shoes 140) to provide a multifactor authentication without causing any inconvenience to the user.

The above examples often discuss whether the device 145 is a trusted participant of the BAN 130, or note a trusted participant 140 of the BAN 130. Within this context, this trust may be one level of several. Thus, the trust extension mechanism described herein may be lower than a strictly authenticated device in some embodiments. Thus, a variety of ultimate trust configurations involving a wearable ensemble may be used. However, by using the described mechanism, a variety of numerous wearables in an ensemble may be used by the user without excessive authentication or other inconvenience.

FIG. 2 illustrates an example of a technique 200 for determining that wearable devices are on the same body 205, according to an embodiment. The technique 200 represents a BCC model of the body 205. The device 210 attempts to communicate with the device 215 via the body 205. If they are on the body 205, the communications path 220 through the body 205 is available. It is noted that the particular BCC mechanism (e.g., circuit, electrostatic, or electromagnetic waves) is unimportant, but rather that the communication does not work if the devices 210 and 215 are not on the body 205.

FIG. 3 illustrates an example of a technique 300 for determining that wearable devices are on the same body, according to an embodiment. The technique 300 represents the motion model of the body. As illustrated, the devices 310 and 315 vertically oscillate in time with the body 305. This oscillation may be measured at each device, and roughly correspond to the vertical motion plot 320. When the plots for both the device 310 and 315 match within a threshold, then it may be determined that they are on the same moving body 305. The specific motion plot 320 may be calibrated to a gait of the user, or otherwise filtered in order to remove extraneous information, such as the horizontal movement of the device 315 on the arm.

The motion model represents using a shared characteristic of the body 305 to assess whether the devices 310 and 315 are on the body. Other body characteristics may also be used, such as heart rate, temperature of the body, etc. Any characteristic of the body may be used as long as the characteristic is observable by both of the device 310 and 315.

FIG. 4 illustrates an example of a technique 400 for determining that wearable devices are on the same body, according to an embodiment. The technique 400 represents an embodiment of the body shape model. As illustrated, the device 405 is measuring an angle 415 (e.g., from horizontal) from itself to the device 410. The device 405 is also measuring a distance 420 between the two devices. Also as illustrated, the position of the user's body is not erect, but rather bent. As described above, this varied body position may provide adjusted possible positions for each of the two devices to which the offset of the direction (e.g., angle from a known point) 415 and the distance 420 may be compared to determine if the two devices are on the same body.

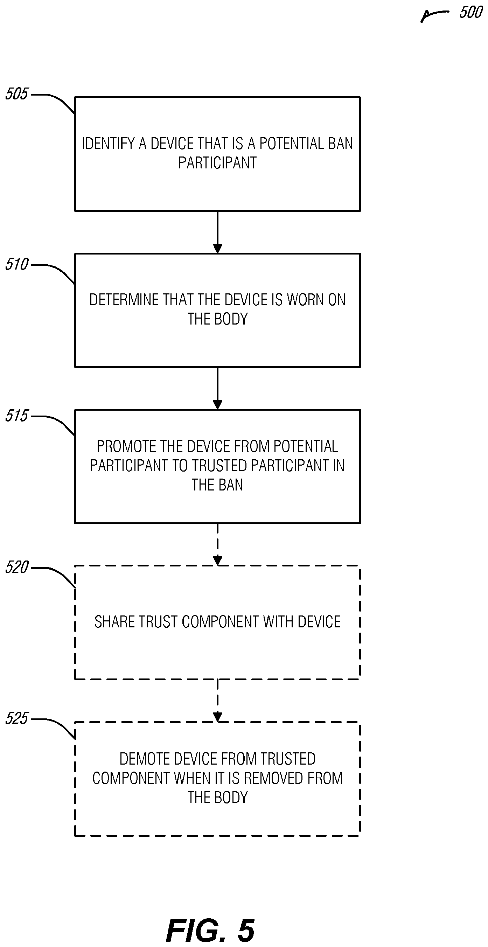

FIG. 5 illustrates a flow diagram of an example of a method 500 for extension of trust in a BAN, according to an embodiment. Operations of the method 500 may be performed on one or more components of a BAN using computer hardware (e.g., such as that described below with respect to FIG. 7 or that described above with respect to FIG. 1).

In an example, the BAN (upon which the method 500 operates) may include an external interface member that is a trusted participant of the BAN and also an external trusted member. In this example, external trusted members include a trust component for an entity that is not part of the BAN. In an example, the external interface member may include a user interface to receive physical interactions, between a person of the body and the external interface member, to authenticate the external interface member. The external interface member may also include a verifier to join the external interface member to the entity using the physical interactions. In an example, the entity is a network that is not part of the BAN.

At operation 505, a device that is a potential participant of the BAN may be identified. In an example, identifying the device that is a potential participant of the BAN may include receiving a signal from the device. For example, the device may broadcast a signal, such as a near field communications request, when it is placed on the body (e.g., a switch activated via an attachment mechanism).

At operation 510, it may be determined that the device identified at operation 505 is worn by a body of the BAN based on a set of models of the body. The models include one or more functions that simulate a feature of the body. For example, a model may include a set of physical relationships between points on the body. In an example, the set of models of the body may include a body-coupled-communication model. In this model, the body is modeled via its own ability to mediate communications. That is, if two devices are using BCC and may communicate with each other, the BCC model will indicate that the two devices are on the same body. In this example, determining that the device is worn by the body includes communicating with the device from a member of the BAN using BAN, the member being a trusted participant of the BAN. Thus, when a trusted participant (e.g., a device already authenticated to the BAN) may communicate with the potential device, it is determined that the potential participant is attached to the body.

In an example, the set of models of the body may include a motion model. In this example, determining that the device is worn by the body may include obtaining motion data from the potential participant and from a trusted member of the BAN. It may be ascertained that the potential participant is on the body if its motion data matches, under respective applied functions and within a threshold, that of the trusted member of the BAN. That is, if the two devices move together as defined by their respective functions, they may be assumed to be on the same body. The functions may define specific movements. Thus, the functions may provide for a period of vertical movement and ignore other movements. Such application may reduce error in, for example, the different movement of a waist and a wrist, which may have different motions when the user moves, but will both likely include a periodic component corresponding to a vertical motion of walking when the body is walking. In an example, the same function is applied to both the potential and the trusted devices. In an example, the functions are selected based on the types of devices to which they are applied. Thus, a watch like device may have a different function applied than a necklace type device. In this example, the device type may be used as a proxy for likely motion of the body at a likely location of the device type, and thus the function may take these likely facts into account.

In an example, the set of models of the body include a shape model. In this example, determining that the device is worn by the body may include obtaining a physical relationship between a member of the BAN and the device. The determining may also include determining that the physical relationship satisfies a shape of a body. In an example, obtaining the physical relationship the selector includes determining at least one of a direction or a distance between the member of the BAN and the device. In an example, determining that the physical relationship satisfies the shape of the body may include identifying a first set of body positions of the member of the BAN based on a first device type of the member of the BAN and identifying a second set of body positions of the device based on a second device type of the device. After the possible positions are identified, it may be determined that a member of the first set of body positions offset by at least one of the direction or the distance is within a threshold of a member of the second set of body positions, and thus both devices are on the body. In an example, the offset includes both the direction and the distance. In an example, the offset is modified by a position of the body.

In an example, determining that the device is worn by the body of the BAN based on a set of models of the body may include using a plurality of members from the set of models of the body. In an example, using the plurality of members from the set of models of the body may include using each member serially, moving to a second member after a first member is satisfied that the device is worn by the body.

At operation 515, the device may be promoted from potential participant to trusted participant of the BAN in response to the determination that the device is on the body. In an example, promoting the device from potential participant to trusted participant may include sharing a current BAN key with the device. In an example, promoting the device from potential participant to trusted participant may include assigning a unique identification to the device. In an example, promoting the device from potential participant to trusted participant may include disseminating the unique identification to another member of the BAN that is a trusted participant.

At optional operation 520, the trust component (of the external interface member described above) may be shared with the device in response to the promotion of the device from potential participant to trusted participant. In an example, the device is to join to the network using the trust component in response to a signal.

At optional operation 525, the device may be monitored after the device is promoted from potential participant to trusted participant based on a set of models of the body and remove the trusted participant designation of the device when the device is not worn on the body.

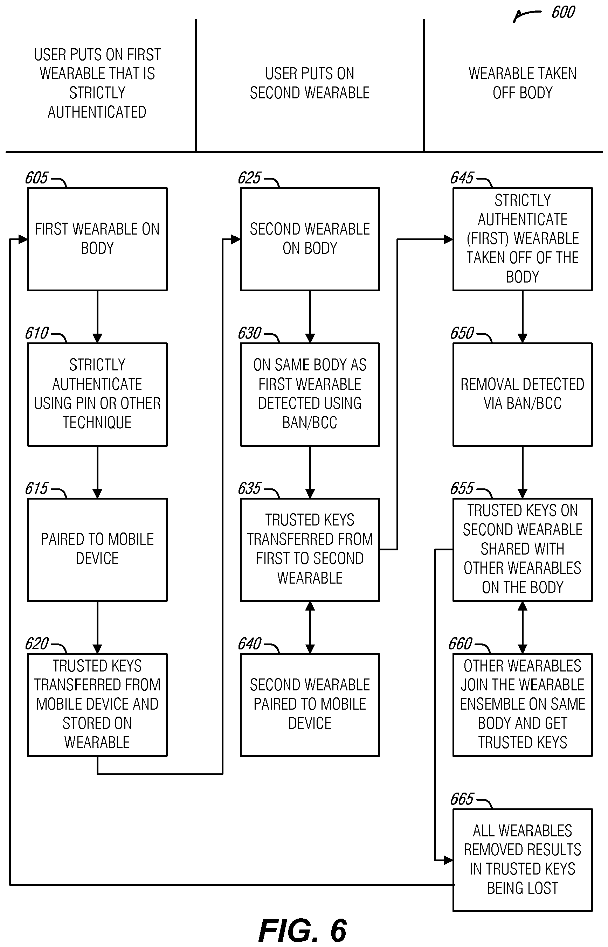

FIG. 6 illustrates a flow diagram of an example of a method 600 for extension of trust in a BAN, according to an embodiment. As illustrated, FIG. 6 is a swim-lane diagram in which the various lanes denote activity of the wearable device with respect to be added to or removed from the user's body. For example, operations 605-620 correspond to putting on a first wearable device, operations 625-640 correspond to the addition of a second wearable, and operations 645-665 correspond to the removal of a wearable. The operations are, however, implemented in computer hardware present, or in communication with a BAN of the body. Examples of such components are described above with respect to FIG. 1 and below with respect to FIG. 7.

At operation 605, a first wearable is placed on the body. In the example of method 600, this first wearable establishes the BAN.

At operation 610, the first wearable is strictly authenticated. Such authentication may include using a personal identification number (PIN) or other technique to verify that the user intended the inclusion of the first wearable into their BAN. Such authentication may occur in a rich interface on the wearable itself, or via coupling to a more capable input mechanism, such as a mobile device.

At operation 615, after the strict authentication, the first wearable may be paired to a mobile device. In an example, the first wearable may be considered an external participant by virtue of this pairing and the external resource (network, device, etc.) access that may be offered by the mobile device.

At operation 620, trusted keys may be transferred to the first wearable from the mobile device. In an example, the trusted keys may be BAN keys used for communication within the network. In an example, the trusted keys may be external trusted keys used for authentication to sources outside of the BAN.

At operation 625, a second wearable may be placed on the body.

At operation 630, the existing system components (e.g., the first wearable or the mobile device) may determine that the second wearable is on the same body as the first wearable. In an example, BCC may be used to perform this verification. Other models, discussed above, may also be used.

At operation 635, after it is determined that the second wearable is on the same body as the first wearable, the trusted keys may be transferred to the second wearable without further authentication steps. Thus, the presence of the two wearables on the same body is enough to trust the second wearable. The keys may be transferred to the second wearable by either the mobile device or the first wearable.

At operation 640, the second wearable pairs with the mobile device. Thus, the second wearable is an equal participant in the BAN as the first wearable at this juncture.

At operation 645, the first wearable is removed from the body.

At operation 650, the removal of the first wearable is noted using the same mechanisms used to determine that the second wearable is on the body at operation 630.

At operations 655 and 660, the trusted keys present on the second wearable are shared with subsequent wearables that are added to the body. Thus, the first wearable is used to establish the BAN, but thereafter is not needed to maintain the BAN, as these functions are assumed by subsequent BAN participants.

At operation 665, when all wearables on the body are removed, the BAN is disbanded. Cleanup of the BAN may include destroying the trusted BAN keys. The absence of such keys may then force another strict authentication (e.g., operation 610) for later devices to establish another BAN.

FIG. 7 illustrates a block diagram of an example machine 700 upon which any one or more of the techniques (e.g., methodologies) discussed herein may perform. In alternative embodiments, the machine 700 may operate as a standalone device or may be connected (e.g., networked) to other machines. In a networked deployment, the machine 700 may operate in the capacity of a server machine, a client machine, or both in server-client network environments. In an example, the machine 700 may act as a peer machine in peer-to-peer (P2P) (or other distributed) network environment. The machine 700 may be a personal computer (PC), a tablet PC, a set-top box (STB), a personal digital assistant (PDA), a mobile telephone, a web appliance, a network router, switch or bridge, or any machine capable of executing instructions (sequential or otherwise) that specify actions to be taken by that machine. Further, while only a single machine is illustrated, the term "machine" shall also be taken to include any collection of machines that individually or jointly execute a set (or multiple sets) of instructions to perform any one or more of the methodologies discussed herein, such as cloud computing, software as a service (SaaS), other computer cluster configurations.

Examples, as described herein, may include, or may operate by, logic or a number of components, or mechanisms. Circuit sets (also known as a group of circuits or circuit groups) are a collection of circuits implemented in tangible entities that include hardware (e.g., simple circuits, gates, logic, etc.). Circuit set membership may be flexible over time and underlying hardware variability. Circuit sets include members that may, alone or in combination, perform specified operations when operating. In an example, hardware of the circuit set may be immutably designed to carry out a specific operation (e.g., hardwired). In an example, the hardware of the circuit set may include variably connected physical components (e.g., execution units, transistors, simple circuits, etc.) including a computer readable medium physically modified (e.g., magnetically, electrically, moveable placement of invariant massed particles, etc.) to encode instructions of the specific operation. In connecting the physical components, the underlying electrical properties of a hardware constituent are changed, for example, from an insulator to a conductor or vice versa. The instructions enable embedded hardware (e.g., the execution units or a loading mechanism) to create members of the circuit set in hardware via the variable connections to carry out portions of the specific operation when in operation. Accordingly, the computer readable medium is communicatively coupled to the other components of the circuit set member when the device is operating. In an example, any of the physical components may be used in more than one member of more than one circuit set. For example, under operation, execution units may be used in a first circuit of a first circuit set at one point in time and reused by a second circuit in the first circuit set, or by a third circuit in a second circuit set at a different time.

Machine (e.g., computer system) 700 may include a hardware processor 702 (e.g., a central processing unit (CPU), a graphics processing unit (GPU), a hardware processor core, or any combination thereof), a main memory 704 and a static memory 706, some or all of which may communicate with each other via an interlink (e.g., bus) 708. The machine 700 may further include a display unit 710, an alphanumeric input device 712 (e.g., a keyboard), and a user interface (UI) navigation device 714 (e.g., a mouse). In an example, the display unit 710, input device 712 and UI navigation device 714 may be a touch screen display. The machine 700 may additionally include a storage device (e.g., drive unit) 716, a signal generation device 718 (e.g., a speaker), a network interface device 720, and one or more sensors 721, such as a global positioning system (GPS) sensor, compass, accelerometer, or other sensor. The machine 700 may include an output controller 728, such as a serial (e.g., universal serial bus (USB), parallel, or other wired or wireless (e.g., infrared (IR), near field communication (NFC), etc.) connection to communicate or control one or more peripheral devices (e.g., a printer, card reader, etc.).

The storage device 716 may include a machine readable medium 722 on which is stored one or more sets of data structures or instructions 724 (e.g., software) embodying or utilized by any one or more of the techniques or functions described herein. The instructions 724 may also reside, completely or at least partially, within the main memory 704, within static memory 706, or within the hardware processor 702 during execution thereof by the machine 700. In an example, one or any combination of the hardware processor 702, the main memory 704, the static memory 706, or the storage device 716 may constitute machine readable media.

While the machine readable medium 722 is illustrated as a single medium, the term "machine readable medium" may include a single medium or multiple media (e.g., a centralized or distributed database, and/or associated caches and servers) configured to store the one or more instructions 724.

The term "machine readable medium" may include any medium that is capable of storing, encoding, or carrying instructions for execution by the machine 700 and that cause the machine 700 to perform any one or more of the techniques of the present disclosure, or that is capable of storing, encoding or carrying data structures used by or associated with such instructions. Nonlimiting machine readable medium examples may include solid-state memories, and optical and magnetic media. In an example, a massed machine readable medium comprises a machine readable medium with a plurality of particles having invariant (e.g., rest) mass. Accordingly, massed machine-readable media are not transitory propagating signals. Specific examples of massed machine readable media may include: non-volatile memory, such as semiconductor memory devices (e.g., Electrically Programmable Read-Only Memory (EPROM), Electrically Erasable Programmable Read-Only Memory (EEPROM)) and flash memory devices; magnetic disks, such as internal hard disks and removable disks; magneto-optical disks; and CD-ROM and DVD-ROM disks.

The instructions 724 may further be transmitted or received over a communications network 726 using a transmission medium via the network interface device 720 utilizing any one of a number of transfer protocols (e.g., frame relay, internet protocol (IP), transmission control protocol (TCP), user datagram protocol (UDP), hypertext transfer protocol (HTTP), etc.). Example communication networks may include a local area network (LAN), a wide area network (WAN), a packet data network (e.g., the Internet), mobile telephone networks (e.g., cellular networks), Plain Old Telephone (POTS) networks, and wireless data networks (e.g., Institute of Electrical and Electronics Engineers (IEEE) 802.11 family of standards known as Wi-Fi®, IEEE 802.16 family of standards known as WiMax®), IEEE 802.15.4 family of standards, peer-to-peer (P2P) networks, among others. In an example, the network interface device 720 may include one or more physical jacks (e.g., Ethernet, coaxial, or phone jacks) or one or more antennas to connect to the communications network 726. In an example, the network interface device 720 may include a plurality of antennas to wirelessly communicate using at least one of single-input multiple-output (SIMO), multiple-input multiple-output (MIMO), or multiple-input single-output (MISO) techniques. The term "transmission medium" shall be taken to include any intangible medium that is capable of storing, encoding or carrying instructions for execution by the machine 700, and includes digital or analog communications signals or other intangible medium to facilitate communication of such software.

### Additional Notes & Examples

Example 1 includes subject matter (such as a device, apparatus, or a system for extension of trust in a body area network) comprising: a detector to identify a device that is a potential participant of the body area network; a selector to determine that the device is worn by a body of the body area network based on a set of models of the body; and an authenticator to promote the device from potential participant to trusted participant of the body area network in response to the determination that the device is on the body.
In Example 2, the subject matter Example 1 may optionally include, wherein the detector includes a transceiver to receive a signal from the device.
In Example 3, the subject matter of any of Examples 1-2 may optionally include, wherein the set of models of the body include a body-coupled-communication model, and wherein to determine that the device is worn by the body includes the selector to communicate with the device from a member of the body area network using body coupled communication, the member being a trusted participant of the body area network.
In Example 4, the subject matter of any of Examples 1-3 may optionally include, wherein the set of models of the body include a motion model, and wherein to determine that the device is worn by the body includes the selector to: obtain first motion data from the device; obtain second motion data from a member of the body are network that is a trusted participant of the body area network; and determine that a first function of first motion data matches a second function of the second motion data within a threshold.
In Example 5, the subject matter of Example 4 may optionally include, wherein the first function and the second function are the same.
In Example 6, the subject matter of any of Examples 4-5 may optionally include, wherein the first function and the second function are selected based on a device type of the device and the member of the body area network respectively.
In Example 7, the subject matter of any of Examples 1-6 may optionally include, wherein the set of models of the body include a shape model, and wherein to determine that the device is worn by the body includes the selector to: obtain a physical relationship between a member of the body area network and the device, the member of the body area network that is a trusted participant of the body area network; and determine that the physical relationship satisfies a shape of a body.
In Example 8, the subject matter of Example 7 may optionally include, wherein to obtain the physical relationship the selector is to determine at least one of a direction or a distance between the member of the body area network and the device.
In Example 9, the subject matter of Example 8 may optionally include, wherein to determine that the physical relationship satisfies a shape of the body includes the selector to: identify a first set of body positions of the member of the body area network based on a first device type of the member of the body area network; identify a second set of body positions of the device based on a second device type of the device; and determine that a member of the first set of body positions offset by at least one of the direction or the distance is within a threshold of a member of the second set of body positions.
In Example 10, the subject matter of Example 9 may optionally include, wherein the offset is modified by a position of the body.
In Example 11, the subject matter of any of Examples 9-10 may optionally include, wherein the offset includes both the direction and the distance.
In Example 12, the subject matter of any of Examples 1-11 may optionally include, wherein to determine that the device is worn by a body of the body area network based on a set of models of the body includes the selector to use a plurality of members from the set of models of the body.
In Example 13, the subject matter of Example 12 may optionally include, wherein to use a plurality of members from the set of models of the body includes the selector to use each model serially, moving to a second model after a first model is satisfied that the device is worn by the body.
In Example 14, the subject matter of any of Examples 1-13 may optionally include, wherein the body area network includes an external interface member that is a trusted participant of the body area network and also an external trusted member, external trusted members including a trust component for an entity that is not part of the body area network.
In Example 15, the subject matter of Example 14 may optionally include, wherein the external interface member includes: a user interface to receive physical interactions, between a person of the body and the external interface member, to authenticate the external interface member; and a verifier to join the external interface member to the entity using the physical interactions.
In Example 16, the subject matter of Example 15 may optionally include, wherein the entity is a network that is not part of the body area network.
In Example 17, the subject matter of Example 16 may optionally include a trust sharing circuit group to share the trust component with the device in response to the promotion of the device from potential participant to trusted participant.
In Example 18, the subject matter of Example 17 may optionally include, wherein the device is to join to the network using the trust component in response to a signal.
In Example 19, the subject matter of any of Examples 1-18 may optionally include, wherein the selector is to monitor that the device is worn on the body after the device is promoted from potential participant to trusted participant based on a set of models of the body and remove the trusted participant designation of the device when the device is not worn on the body.
In Example 20, the subject matter of any of Examples 1-19 may optionally include, wherein to promote the device from potential participant to trusted participant includes the authenticator is to share a current body area network key with the device.
In Example 21, the subject matter of any of Examples 1-20 may optionally include, wherein to promote the device from potential participant to trusted participant includes the authenticator is to assign a unique identification to the device.
In Example 22, the subject matter of Example 21 may optionally include, wherein to promote the device from potential participant to trusted participant includes the authenticator is to disseminate the unique identification to another member of the body area network that is a trusted participant.
Example 23 may include, or may optionally be combined with eth subject matter of any of Examples 1-22 to include, subject matter (such as a method, means for performing acts, or a machine readable medium including instructions that, when performed by a machine, cause the machine to perform acts for extension of trust in a body area network) comprising: identifying a device that is a potential participant of the body area network; determining that the device is worn by a body of the body area network based on a set of models of the body; and promoting the device from potential participant to trusted participant of the body area network in response to the determination that the device is on the body.
In Example 24, the subject matter of Example 23 may optionally include, wherein identifying the device that is a potential participant of the body area network includes receiving a signal from the device.
In Example 25, the subject matter of any of Examples 23-24 may optionally include, wherein the set of models of the body include a body-coupled-communication model, and wherein determining that the device is worn by the body includes communicating with the device from a member of the body area network using body coupled communication, the member being a trusted participant of the body area network.
In Example 26, the subject matter of any of Examples 23-26 may optionally include, wherein the set of models of the body include a motion model, and wherein determining that the device is worn by the body includes: obtaining first motion data from the device; obtaining second motion data from a member of the body are network that is a trusted participant of the body area network; and determining that a first function of first motion data matches a second function of the second motion data within a threshold.
In Example 27, the subject matter of Example 26 may optionally include, wherein the first function and the second function are the same.
In Example 28, the subject matter of any of Examples 26-27 may optionally include, wherein the first function and the second function are selected based on a device type of the device and the member of the body area network respectively.
In Example 29, the subject matter of any of Examples 23-28 may optionally include. The method of claim 23, wherein the set of models of the body include a shape model, and wherein determining that the device is worn by the body includes: obtaining a physical relationship between a member of the body area network and the device, the member of the body area network that is a trusted participant of the body area network; and determining that the physical relationship satisfies a shape of a body.
In Example 30, the subject matter of Example 29 may optionally include, wherein obtaining the physical relationship the selector includes determining at least one of a direction or a distance between the member of the body area network and the device.
In Example 31, the subject matter of Example 30 may optionally include, wherein determining that the physical relationship satisfies the shape of the body includes: identifying a first set of body positions of the member of the body area network based on a first device type of the member of the body area network; identifying a second set of body positions of the device based on a second device type of the device; and determining that a member of the first set of body positions offset by at least one of the direction or the distance is within a threshold of a member of the second set of body positions.
In Example 32, the subject matter of Example 31 may optionally include, wherein the offset is modified by a position of the body.
In Example 33, the subject matter of any of Examples 31-32 may optionally include, wherein the offset includes both the direction and the distance.
In Example 34, the subject matter of any of Examples 23-33 may optionally include, wherein determining that the device is worn by the body of the body area network based on a set of models of the body using a plurality of members from the set of models of the body.
In Example 35, the subject matter of Example 34 may optionally include. The method of claim 34, wherein using a plurality of members from the set of models of the body includes using each member serially, moving to a second member after a first member is satisfied that the device is worn by the body.
In Example 36, the subject matter of any of Examples 23-35 may optionally include, wherein the body area network includes an external interface member that is a trusted participant of the body area network and also an external trusted member, external trusted members including a trust component for an entity that is not part of the body area network.
In Example 37, the subject matter of Example 36 may optionally include, wherein the external interface member includes: a user interface to receive physical interactions, between a person of the body and the external interface member, to authenticate the external interface member; and a verifier to join the external interface member to the entity using the physical interactions.
In Example 38, the subject matter of Example 37 may optionally include, wherein the entity is a network that is not part of the body area network.
In Example 39, the subject matter of Example 38 may optionally include, comprising sharing the trust component with the device in response to the promotion of the device from potential participant to trusted participant.
In Example 40, the subject matter of Example 39 may optionally include, wherein the device is to join to the network using the trust component in response to a signal.
In Example 41, the subject matter of any of Examples 23-40 may optionally include monitoring the device after the device is promoted from potential participant to trusted participant based on a set of models of the body and remove the trusted participant designation of the device when the device is not worn on the body.
In Example 42, the subject matter of any of Examples 23-41 may optionally include, wherein promoting the device from potential participant to trusted participant includes sharing a current body area network key with the device.
In Example 43, the subject matter of any of Examples 23-42 may optionally include, wherein promoting the device from potential participant to trusted participant includes assigning a unique identification to the device.
In Example 44, the subject matter of Example 43 may optionally include, wherein promoting the device from potential participant to trusted participant includes disseminating the unique identification to another member of the body area network that is a trusted participant.
In Example 45, a machine-readable medium including instructions that, when executed by a machine, cause the machine to perform a method of any of Examples 23-44.
In Example 46, a system for extension of trust in a body area network comprising means to perform a method of any of Examples 23-44.
Example 47 may include, or may optionally be combined with eth subject matter of any of Examples 1-46 to include, subject matter (such as a method, means for performing acts, or a machine readable medium including instructions that, when performed by a machine, cause the machine to perform acts for extension of trust in a body area network) comprising: identification means for identifying a device that is a potential participant of the body area network; selector means for determining that the device is worn by a body of the body area network based on a set of models of the body; and authenticator means for promoting the device from potential participant to trusted participant of the body area network in response to the determination that the device is on the body.
In Example 48, the subject matter of Example 47 may optionally include, wherein identifying the device that is a potential participant of the body area network includes receiving a signal from the device.
In Example 49, the subject matter of any of Examples 47-48 may optionally include, wherein the set of models of the body include a body-coupled-communication model, and wherein determining that the device is worn by the body includes communicating with the device from a member of the body area network using body coupled communication, the member being a trusted participant of the body area network.
In Example 50, the subject matter of any of Examples 47-49 may optionally include, wherein the set of models of the body include a motion model, and wherein determining that the device is worn by the body includes motion sensing means for: obtaining first motion data from the device; obtaining second motion data from a member of the body are network that is a trusted participant of the body area network; and determining that a first function of first motion data matches a second function of the second motion data within a threshold.
In Example 51, the subject matter of Example 50 may optionally include, wherein the first function and the second function are the same.
In Example 52, the subject matter of any of Examples 50-51 may optionally include, wherein the first function and the second function are selected based on a device type of the device and the member of the body area network respectively.
In Example 53, the subject matter of any of Examples 47-52 may optionally include, wherein the set of models of the body include a shape model, and wherein determining that the device is worn by the body includes: obtaining a physical relationship between a member of the body area network and the device, the member of the body area network that is a trusted participant of the body area network; and determining that the physical relationship satisfies a shape of a body.
In Example 54, the subject matter of Example 53 may optionally include, wherein obtaining the physical relationship the selector includes determining at least one of a direction or a distance between the member of the body area network and the device.
In Example 55, the subject matter of Example 54 may optionally include, wherein determining that the physical relationship satisfies the shape of the body includes: identifying a first set of body positions of the member of the body area network based on a first device type of the member of the body area network; identifying a second set of body positions of the device based on a second device type of the device; and determining that a member of the first set of body positions offset by at least one of the direction or the distance is within a threshold of a member of the second set of body positions.
In Example 56, the subject matter of Example 55 may optionally include, wherein the offset is modified by a position of the body.
In Example 57, the subject matter of any of Examples 55-56 may optionally include, wherein the offset includes both the direction and the distance.
In Example 58, the subject matter of any of Examples 47-57 may optionally include, wherein determining that the device is worn by the body of the body area network based on a set of models of the body includes using a plurality of members from the set of models of the body.
In Example 59, the subject matter of Example 58 may optionally include, wherein using a plurality of members from the set of models of the body includes using each member serially, moving to a second member after a first member is satisfied that the device is worn by the body.
In Example 60, the subject matter of any of Examples 47-59 may optionally include, wherein the body area network includes an external interface member that is a trusted participant of the body area network and also an external trusted member, external trusted members including a trust component for an entity that is not part of the body area network.
In Example 61, the subject matter of Example 60 may optionally include, wherein the external interface member includes: a user interface to receive physical interactions, between a person of the body and the external interface member, to authenticate the external interface member; and a verifier to join the external interface member to the entity using the physical interactions.
In Example 62, the subject matter of any of Examples 60-62 may optionally include, wherein the entity is a network that is not part of the body area network.
In Example 63, the subject matter of any of Examples 60-62 may optionally include sharing means for sharing the trust component with the device in response to the promotion of the device from potential participant to trusted participant.
In Example 64, the subject matter of Example 63 may optionally include. The system of claim 63, wherein the device is to join to the network using the trust component in response to a signal.
In Example 65, the subject matter of any of Examples 47-64 may optionally include monitor means for monitoring the device after the device is promoted from potential participant to trusted participant based on a set of models of the body and remove the trusted participant designation of the device when the device is not worn on the body.
In Example 66, the subject matter of any of Examples 47-65 may optionally include, wherein promoting the device from potential participant to trusted participant includes sharing a current body area network key with the device.
In Example 67, the subject matter of any of Examples 47-66 may optionally include, wherein promoting the device from potential participant to trusted participant includes assigning a unique identification to the device.
In Example 68, the subject matter of any of Examples 47-67 may optionally include, wherein promoting the device from potential participant to trusted participant includes disseminating the unique identification to another member of the body area network that is a trusted participant.

The above detailed description includes references to the accompanying drawings, which form a part of the detailed description. The drawings show, by way of illustration, specific embodiments that may be practiced. These embodiments are also referred to herein as "examples." Such examples may include elements in addition to those shown or described. However, the present inventors also contemplate examples in which only those elements shown or described are provided. Moreover, the present inventors also contemplate examples using any combination or permutation of those elements shown or described (or one or more aspects thereof), either with respect to a particular example (or one or more aspects thereof), or with respect to other examples (or one or more aspects thereof) shown or described herein.

In this document, the terms "a" or "an" are used, as is common in patent documents, to include one or more than one, independent of any other instances or usages of "at least one" or "one or more." In this document, the term "or" is used to refer to a nonexclusive or, such that "A or B" includes "A but not B," "B but not A," and "A and B," unless otherwise indicated. In the appended claims, the terms "including" and "in which" are used as the plain- English equivalents of the respective terms "comprising" and "wherein." Also, in the following claims, the terms "including" and "comprising" are open-ended, that is, a system, device, article, or process that includes elements in addition to those listed after such a term in a claim are still deemed to fall within the scope of that claim. Moreover, in the following claims, the terms "first," "second," and "third," etc. are used merely as labels, and are not intended to impose numerical requirements on their objects.

The above description is intended to be illustrative, and not restrictive. For example, the above-described examples (or one or more aspects thereof) may be used in combination with each other. Other embodiments may be used, such as by one of ordinary skill in the art upon reviewing the above description. The Abstract is to allow the reader to quickly ascertain the nature of the technical disclosure and is submitted with the understanding that it will not be used to interpret or limit the scope or meaning of the claims. Also, in the above Detailed Description, various features may be grouped together to streamline the disclosure.

## Claims

1. A method for extension of trust in a body area network (130); the method comprising:
identifying a device (145) that is a potential participant of the body area network;
determining that the device is worn by a body (125) of the body area network based on a set of models of the body, wherein the set of models of the body include a shape model and wherein determining that the device is worn by the body includes:
obtaining a physical relationship between a member (140) of the body area network and the device, the member of the body area network that is a trusted participant of the body area network; and
determining that the physical relationship satisfies a shape of a body; and
promoting the device from potential participant to trusted participant of the body area network in response to the determination that the device is on the body.

2. The method of claim 1, wherein identifying the device that is a potential participant of the body area network includes receiving a signal from the device.

3. The method of any of claims 1-2, wherein the set of models of the body include a body-coupled-communication model, and wherein determining that the device is worn by the body includes communicating with the device from a member of the body area network using body coupled communication, the member being a trusted participant of the body area network.

4. The method of any of claims 1-3, wherein the set of models of the body include a motion model, and wherein determining that the device is worn by the body includes:
obtaining first motion data from the device;
obtaining second motion data from a member of the body are network that is a trusted participant of the body area network; and
determining that a first function of first motion data matches a second function of the second motion data within a threshold.

5. The method of claim 1, wherein obtaining the physical relationship includes determining at least one of a direction or a distance between the member of the body area network and the device.

6. The method of claim 5, wherein determining that the physical relationship satisfies the shape of the body includes:
identifying a first set of body positions of the member of the body area network based on a first device type of the member of the body area network;
identifying a second set of body positions of the device based on a second device type of the device; and
determining that a member of the first set of body positions offset by at least one of the direction or the distance is within a threshold of a member of the second set of body positions.

7. The method of any of claims 1-6, wherein determining that the device is worn by the body of the body area network based on a set of models of the body comprises using a plurality of members from the set of models of the body.

8. The method of claim 7, wherein using a plurality of members from the set of models of the body includes using each member serially, moving to a second member after a first member is satisfied that the device is worn by the body.

9. The method of any of claims 1-8, wherein the body area network includes an external interface member (135) that is a trusted participant of the body area network and also an external trusted member, external trusted members including a trust component for an entity that is not part of the body area network.

10. The method of claim 9, wherein the external interface member includes:
a user interface to receive physical interactions, between a person of the body and the external interface member, to authenticate the external interface member; and
a verifier to join the external interface member to the entity using the physical interactions.

11. The method of claim 10, wherein the entity is a network that is not part of the body area network.

12. The method of claim 11, comprising sharing the trust component with the device in response to the promotion of the device from potential participant to trusted participant.

13. A machine-readable medium including instructions that, when executed by a machine, cause the machine to perform a method of any of claims 1-12.

14. A system for extension of trust in a body area network comprising means to perform a method of any of claims 1-12.

## Patentansprüche

1. Verfahren zum Erweitern eines Vertrauens in einem körpernahen Netzwerk (130), wobei das Verfahren umfasst:
Identifizieren einer Vorrichtung (145), die ein potenzieller Teilnehmer des körpernahen Netzwerks ist;
Ermitteln aufgrund einer Gruppe von Modellen eines Körpers, dass die Vorrichtung von einem Körper (125) des körpernahen Netzwerks getragen wird, wobei die Gruppe von Modellen des Körpers ein Gestaltmodell aufweist und wobei das Ermitteln, dass die Vorrichtung von dem Körper getragen wird, umfasst:
Erhalten einer physischen Beziehung zwischen einem Element (140) des körpernahen Netzwerks und der Vorrichtung, wobei das Element des körpernahen Netzwerks ein vertrauenswürdiger Teilnehmer des körpernahen Netzwerks ist; und
Ermitteln, dass die physische Beziehung eine Gestalt eines Körpers erfüllt; und
Befördern der Vorrichtung von einem potenziellen Teilnehmer zu einem vertrauenswürdigen Teilnehmer des körpernahen Netzwerks als Reaktion auf das Ermitteln, dass sich die Vorrichtung an dem Körper befindet.

2. Verfahren nach Anspruch 1, wobei das Identifizieren, dass die Vorrichtung ein potenzieller Teilnehmer des körpernahen Netzwerks ist, ein Empfangen eines Signals von der Vorrichtung aufweist.

3. Verfahren nach einem der Ansprüche 1 bis 2, wobei die Gruppe von Modellen des Körpers ein körperverbundenes Kommunikationsmodell aufweist und wobei das Ermitteln, dass die Vorrichtung von dem Körper getragen wird, ein Kommunizieren eines Elements des körpernahen Netzwerks mit der Vorrichtung mithilfe einer körperverbundenen Kommunikation aufweist, wobei das Element ein vertrauenswürdiger Teilnehmer des körpernahen Netzwerks ist.

4. Verfahren nach einem der Ansprüche 1 bis 3, wobei die Gruppe von Modellen des Körpers ein Bewegungsmodell aufweist und wobei das Ermitteln, dass die Vorrichtung von dem Körper getragen wird, umfasst:
Erhalten von ersten Bewegungsdaten von der Vorrichtung;
Erhalten von zweiten Bewegungsdaten von einem Element des körpernahen Netzwerks, das ein vertrauenswürdiger Teilnehmer des körpernahen Netzwerks ist; und
Ermitteln, dass eine erste Funktion der ersten Bewegungsdaten mit einer zweiten Funktion der zweiten Bewegungsdaten innerhalb eines Schwellenwerts übereinstimmt.

5. Verfahren nach Anspruch 1, wobei das Erhalten der physischen Beziehung ein Ermitteln mindestens einer von einer Richtung oder einer Entfernung zwischen dem Element des körpernahen Netzwerks und der Vorrichtung aufweist.

6. Verfahren nach Anspruch 5, wobei das Ermitteln, dass die physische Beziehung eine Gestalt eines Körpers erfüllt, umfasst:
Identifizieren einer ersten Gruppe von Körperpositionen des Elements des körpernahen Netzwerks aufgrund eines ersten Vorrichtungstyps des Elements des körpernahen Netzwerks;
Identifizieren einer zweiten Gruppe von Körperpositionen der Vorrichtung aufgrund eines zweiten Vorrichtungstyps der Vorrichtung; und
Ermitteln, dass ein Element der ersten Gruppe von Körperpositionen, das um mindestens eine aus der Richtung oder der Entfernung versetzt ist, innerhalb eines Schwellenwerts eines Elements der zweiten Gruppe von Körperpositionen liegt.

7. Verfahren nach einem der Ansprüche 1 bis 6, wobei das Ermitteln aufgrund einer Gruppe von Modellen des Körpers, dass die Vorrichtung von dem Körper des körpernahen Netzwerks getragen wird, ein Verwenden einer Vielzahl von Elementen aus der Gruppe von Modellen des Körpers umfasst.

8. Verfahren nach Anspruch 7, wobei das Verwenden einer Vielzahl von Elementen aus der Gruppe von Modellen des Körpers ein aufeinanderfolgendes Verwenden von allen Elementen aufweist, indem mit einem zweiten Element weitergemacht wird, nachdem für ein erstes Element erfüllt wurde, dass die Vorrichtung von dem Körper getragen wird.

9. Verfahren nach einem der Ansprüche 1 bis 8, wobei das körpernahe Netzwerk ein externes Schnittstellenelement (135) aufweist, das ein vertrauenswürdiger Teilnehmer des körpernahen Netzwerks und auch ein externes vertrauenswürdiges Element ist; wobei externe vertrauenswürdige Elemente eine vertrauenswürdige Komponente für eine Entität aufweisen, die kein Teil des körpernahen Netzwerks ist.

10. Verfahren nach Anspruch 9, wobei das externe Schnittstellenelement aufweist:
eine Benutzeroberfläche zum Empfangen von physischen gegenseitigen Beeinflussungen zwischen einer Person des Körpers und dem externen Schnittstellenelement, um das externe Schnittstellenelement zu authentifizieren; und
eine Prüfeinheit zum Verbinden des externen Schnittstellenelements mit der Entität mithilfe der physischen gegenseitigen Beeinflussungen.

11. Verfahren nach Anspruch 10, wobei die Entität ein Netzwerk ist, das kein Teil des körpernahen Netzwerks ist.

12. Verfahren nach Anspruch 11, das ein gemeinsames Nutzen der vertrauenswürdigen Komponente zusammen mit der Vorrichtung als Reaktion auf das Befördern der Vorrichtung von einem potenziellen Teilnehmer zu einem vertrauenswürdigen Teilnehmer umfasst.

13. Maschinenlesbares Medium, das Befehle enthält, die, wenn sie von einer Maschine ausgeführt werden, die Maschine veranlassen, das Verfahren nach einem der Ansprüche 1 bis 12 auszuführen.

14. System zum Erweitern eines Vertrauens in einem körpernahen Netzwerk, das ein Element zum Ausführen eines Verfahrens nach einem der Ansprüche 1 bis 12 umfasst.

## Revendications

1. Procédé d'extension de confiance dans un réseau local corporel (130) ; le procédé comprenant :
l'identification d'un dispositif (145) qui est un participant potentiel du réseau local corporel ;
la détermination que le dispositif est porté par un corps (125) du réseau local corporel sur la base d'un ensemble de modèles du corps, l'ensemble des modèles du corps comprenant un modèle de forme, et la détermination que le dispositif est porté par le corps comprenant :
l'obtention d'une relation physique entre un membre (140) du réseau local corporel et le dispositif, le membre du réseau local corporel étant un participant de confiance du réseau local corporel ; et
la détermination que la relation physique satisfait la forme d'un corps ; et
la promotion du dispositif de participant potentiel à participant de confiance du réseau local corporel en réponse à la détermination que le dispositif est sur le corps.

2. Procédé selon la revendication 1, l'identification du dispositif qui est un participant potentiel du réseau local corporel comprenant la réception d'un signal provenant du dispositif.

3. Procédé selon l'une quelconque des revendications 1-2, l'ensemble des modèles du corps comprenant un modèle de communication couplé au corps, et la détermination que le dispositif est porté par le corps comprenant la communication avec le dispositif à partir d'un membre du réseau local corporel en utilisant une communication couplée au corps, le membre étant un participant de confiance du réseau local corporel.

4. Procédé selon l'une quelconque des revendications 1 à 3, l'ensemble des modèles du corps comprenant un modèle de mouvement, et la détermination que le dispositif est porté par le corps comprenant :
l'obtention de premières données de mouvement provenant du dispositif ;
l'obtention de deuxièmes données de mouvement provenant d'un membre du réseau local corporel qui est un participant de confiance du réseau local corporel ; et
la détermination qu'une première fonction des premières données de mouvement correspond à une deuxième fonction des deuxièmes données de mouvement en deçà d'un seuil.

5. Procédé selon la revendication 1, l'obtention de la relation physique comprenant la détermination d'au moins l'une parmi une direction ou une distance entre le membre du réseau local corporel et le dispositif.

6. Procédé selon la revendication 5, la détermination que la relation physique satisfait la forme du corps comprenant :
l'identification d'un premier ensemble de positions corporelles du membre du réseau local corporel sur la base d'un premier type de dispositif du membre du réseau local corporel ;
l'identification d'un deuxième ensemble de positions corporelles du dispositif sur la base d'un deuxième type de dispositif ; et
la détermination qu'un membre du premier ensemble de positions corporelles décalées par au moins l'une parmi la direction ou la distance se trouve en deçà d'un seuil d'un membre du deuxième ensemble de positions corporelles.

7. Procédé selon l'une quelconque des revendications 1 à 6, la détermination que le dispositif est porté par le corps du réseau local corporel sur la base d'un ensemble de modèles du corps comprenant l'utilisation d'une pluralité de membres à partir de l'ensemble des modèles du corps.

8. Procédé selon la revendication 7, l'utilisation d'une pluralité de membres à partir de l'ensemble des modèles du corps comprenant l'utilisation en série de chaque membre, se déplaçant à un deuxième membre après qu'un premier membre ait satisfait que le dispositif est porté par le corps.

9. Procédé selon l'une quelconque des revendications 1-8, le réseau local corporel comprenant un membre d'interface externe (135) qui est un participant de confiance du réseau local corporel et également un membre de confiance externe, des membres de confiance externes comprenant un composant de confiance pour une entité qui ne fait pas partie du réseau local corporel.

10. Procédé selon la revendication 9, le membre d'interface externe comprenant :
une interface utilisateur pour recevoir les interactions physiques, entre une personne du corps et le membre d'interface externe, afin d'authentifier le membre d'interface externe ; et
un dispositif de vérification pour joindre le membre de l'interface externe à l'entité en utilisant les interactions physiques.

11. Procédé selon la revendication 10, l'entité étant un réseau qui ne fait pas partie du réseau local corporel.

12. Procédé selon la revendication 11, comprenant le partage du composant de confiance avec le dispositif en réponse à la promotion du dispositif de participant potentiel à participant de confiance.

13. Support lisible par machine comprenant des instructions qui, lorsqu'elles sont exécutées par une machine, amènent la machine à réaliser un procédé selon l'une quelconque des revendications 1-12.

14. Système pour l'extension de confiance dans un réseau local corporel comprenant un moyen pour réaliser un procédé selon l'une quelconque des revendications 1-12.
